# EUROPEAN PATENT APPLICATION

(11) **EP 1 217 797 A1**
(43) Date of publication of application: **26.06.2002**
(21) Application number: 01310736.2
(22) Date of filing: 20.12.2001
(51) Int. Cl.: H04L 12/64, H04L 29/06

(54) **Method and apparatus for IP packet multiplexing**

(30) Priority: 22.12.2000 JP 2000389976
(71) Applicant: MATSUSHITA ELECTRIC INDUSTRIAL CO., LTD., Kadoma-shi, Osaka 571-8501 (JP)
(72) Inventor: Tsumori, Shinichi c/oMatsushita Electric Ind.Co., Osaka 571-8501 (JP); Kumazawa, Masayuki c/oMatsushita Electric Ind.Co., Osaka 571-8501 (JP); Shimizu, Yuji c/oMatsushita Electric Ind.Co., Osaka 571-8501 (JP)
(74) Representative: Balsters, Robert

(57) **Abstract**

Multiplexing/fragmentation means which is on the sending side, when sending out an IP packet to IP telephones which is under command of multiplexing/fragmentation means which is on the receiving side, places an IP address of the receiving-side multiplexing/fragmentation means at the beginning and adds an identifier of the destination IP telephones and an IP payload after this, whereby a multiplexed packet is prepared. The identifier is shorter than the record length of an IP header. Although there exist a plurality of IP telephones, as long as these IP telephones are under command of the receiving-side multiplexing/fragmentation means, not only can packets having the same IP telephones but packets having different IP telephones be multiplexed as well.

## Description

### BACKGROUND OF THE INVENTION

### 1. Field of the Invention

The present invention relates to an IP packet transmission apparatus for transmission of IP packets through an IP network and relevant techniques.

### 2. Description of the Related Art

Data transmission on an IP network uses IP packets. Each packet includes a header having a certain length (IP header) irrelevant to data size prior to transmission of the actual data.

Hence, including the header, an IP network carries IP packets which have sizes larger than the size of the actual data.

In recent years, as a practical application for use of the Internet, speech telecommunications using VoIP (Voice over IP) techniques has been increasingly available. Demands are now placed on methods of speech telecommunications that minimize delay time.

In general, delay time increases with increasing size of the IP packet. Hence, in VoIP, the speech data (stream) is divided (fragmentation) into smaller sizes (approximately 20 bytes) to which necessary headers (RTP headers, UDP headers and IP headers in the case of VoIP) are added and transmitted.

The total length of these headers is 40 bytes. When the 40-byte header is added to the 20-byte data, the result is a 60-byte packet with headers occupy two thirds of the IP packet.

Since a large number of such IP packets are sent out to an IP network continuously, the bandwidth needed for speech telecommunications increases a great deal. This increases the processing load on switching devices (routers, etc.), which is a problem.

Such a problem is not limited to speech telecommunications but can generally arise when the length of a header added to actual data is large compared to the length of the actual data (payload).

One technique intended to solve this problem in sending IP packets is disclosed in Japanese Unexamined Patent Publication No. 2000-209228, for example. According to this conventional IP packet sending method, IP packets having the same IP address (the same destination) and the same prefix length are collected before being sent on a wide area network.

The plurality of the collected IP packets are multiplexed as a new IP packet having a single IP address. This reduces the processing load on routers.

### OBJECTS AND SUMMARY OF THE INVENTION

The conventional IP packet sending method described above does not multiplex IP packets which have different IP addresses (different destinations). In other words, when a plurality of IP packets directed to different destinations are to be sent simultaneously, these IP packets cannot be multiplexed.

As a result, there still remains the problem that the total bandwidth needed for an IP network remains wide and the processing load upon switching devices in the IP network remains large.

### OBJECTS AND SUMMARY OF THE INVENTION

Accordingly, it is an object of the present invention to provide an IP packet transmission apparatus and relevant techniques, which reduces the total bandwidth needed for an IP network as much as possible and thereby decreases the processing load on switching devices in the IP network.

An IP packet transmission apparatus according to a first embodiment of the invention comprises multiplexing means, which sends out to an IP network a multiplexed packet is obtained by multiplexing a plurality of IP packets which are sent from terminals under the command of the multiplexing means, and fragmentation means which fragments the multiplexed packet received through the IP network into a plurality of IP packets and transfers the packets to terminals which are under command of the fragmentation means. The multiplexing means acquires, with respect to a destination terminal which is a destination, an identifier of the destination terminal and an IP address of the fragmentation means which has the destination terminal under command of the fragmentation means. Located at the beginning of the multiplexed packet is the IP address of the fragmentation means which has the destination terminal under its command, and the multiplexed packet includes the identifier of the destination terminal and a portion removing an IP header from an IP packet. The identifier has a smaller quantity of information than that of the IP header.

When IP packets are to be sent to terminals which are under command of the fragmentation means, this structure not only allows multiplexing of IP packets having the same IP address (that is, where IP addresses are directed to identical destinations,) but also permits multipiexing of IP packets having different IP addresses (IP addresses directed to different destinations).

As a result, the total bandwidth needed for the IP network is reduced as much as possible, and the processing load on switching devices in the IP network is reduced.

In an IP packet transmission apparatus according to a second embodiment of the invention, in addition to the first embodiment of the invention, the multiplexing means adds the identifier of the destination terminal after the IP address of the fragmentation means which has the destination terminal under its command, and then further adds the portion removing the IP header from said IP packet, to thereby prepare the multiplexed packet.

This structure allows the identifier and the portion excluding the IP header to be added one after another every time the multiplexing means receives one IP packet.

Hence, it is not necessary to rearrange the identifiers and the portions excluding the IP headers, which in turn realizes high-speed multiplexing. In a similar manner, this technique realizes high-speed fragmentation as well.

In an IP packet tansmission apparatus according to a third embodiment of the invention, in addition to the first or second embodiment of the invention, the multiplexing means terminates preparation of one multiplexed packet when a predetermined period of time has elapsed.

This structure creates a delay time in sending and receiving a multiplexed packet appropriately, and maintains a constant transmission speed.

In an IP packet transmission apparatus according to a fourth embodiment of the invention, in addition to the first, second or third embodiment of the invention, the multiplexing means terminates preparation of one multiplexed packet when the record length of a multiplexed packet which is being prepared exceeds a predetermined value.

With this structure, because the predetermined value is determined considering a maximum acceptable length of an IP packet, terminating the preparation of a multiplexed packet in this manner avoids a situation in which the length of a prepared multiplexed packet exceeds the maximum allowable length of an IP packet.

In an IP packet transmission apparatus according to a fifth embodiment of the invention, in addition to the first, second, third or fourth embodiment of the invention, the multiplexing means has a multiplexing reference table which associates, with respect to the destination terminal, an IP address of the destination terminal, an identifier of the destination terminal and the IP address of the fragmentation means which has the destination terminal under its command. Using the multiplexing reference table, the multiplexing means acquires the identifier of the destination terminal and the IP address of the fragmentation means which has the destination terminal under its command, based on the IP address of the destination terminal. The fragmentation means has a fragmentation reference table which associates, with respect to a terminal which is under command of the fragmentation means, an IP address of the terminal, an identifier of the terminal and the IP address of the fragmentation means. Using the fragmentation reference table and based on an identifier contained in the multiplexed packet which is received, the fragmentation means acquires an IP address of a corresponding terminal, and prepares and transfers an IP packet.

In this structure, the multiplexing means and the fragmentation means both contain the multiplexing reference table and the fragmentation reference table on their own.

This accordingly realizes multiplexing and fragmentation at a higher speed as compared to the speed which is possible in a system where a dedicated server or the like is accessed to use a multiplexing reference table and the fragmentation reference table.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is a block diagram showing an overall structure of an IP packet transmission system according to a preferred embodiment of the present invention.

Fig. 2 is a block diagram showing a structure of the multiplexing/fragmentation means shown in Fig. 1.

Fig. 3 is a drawing showing the data structure of an IP packet.

Fig. 4 is a drawing showing the data structure of a multiplexed packet.

Fig. 5 is a flow chart showing the sequence of multiplexing.

Fig. 6 is a flow chart showing the sequence of fragmentation.

Fig. 7 is a drawing showing another example of a data structure of a multiplexed packet.

### DETAILED DESCRIPTION OF THE PREFERRED EMBODIMENTS

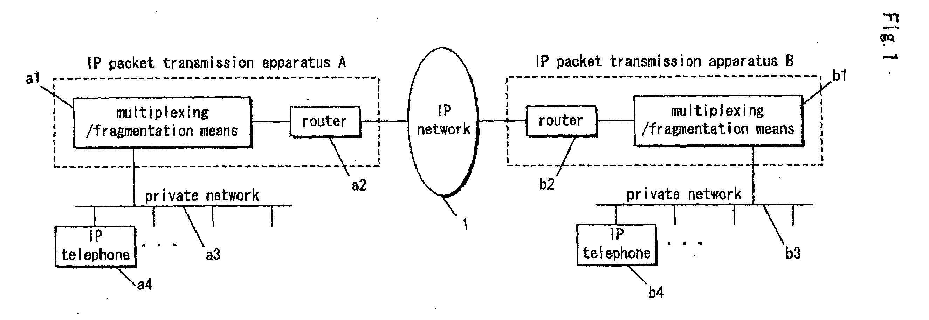

Referring to Fig. 1, an IP packet transmission system includes IP packet transmission apparatuses A and B interconnected over an IP network 1. The IP packet transmission apparatus A contains a multiplexing/fragmentation means a1, a router a2 and a private network (LAN) a3 connected to a plurality of IP telephones (terminals) a4 . . .. The IP packet transmission apparatus B also contains similar elements.

The plurality of IP telephones a4 . . . are installed under command of the multiplexing/fragmentation means a1. The IP telephones a4 and the multiplexing/fragmentation means a1 are connected over the private network a3. The plurality of IP telephones a4 . . . all have IP addresses that are different from each other.

The multiplexing/fragmentation means a1 is connected to the router a2. The router a2, in turn, is connected to the IP network 1. Connections between a router b2, multiplexiug/fragmentation means b1 and a plurality of IP telephones b4 are similar.

In addition, although not shown in the drawing, a plurality of IP packet transmission apparatuses having similar structures and functions are connected, in addition to the IP packet transmission apparatuses A and B, to the IP network 1. In a similar manner, a plurality of IP telephones exist under command of each IP packet transmission apparatus.

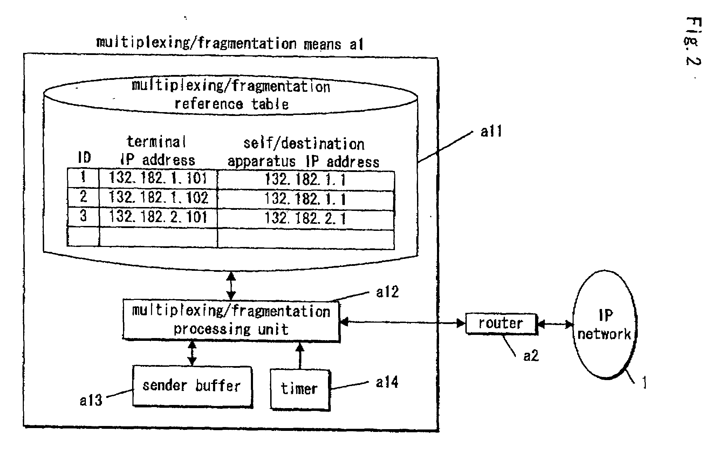

Referring now to Fig. 2, the multiplexing/fragmentation means a1 contains a multiplexing/fragmentation reference table a11, a multiplexing/fragmentation processing unit a12, a sender buffer a13 and a timer a14.

The multiplexing/fragmentation processing unit a12, for data transmission, sends to the IP network 1 a multiplexed packet containing a plurality of IP packets sent from the IP telephones a4 under control of the multiplexing/fragmentation processing unit a12. The multiplexing/fragmentation processing unit a12, when receiving data, fragments a received multiplexed packet into a plurality of IP packets and forwards them to appropriate ones of the IP telephones a4 which are under command of the multiplexing/fragmentation processing unit a12.

A plurality of IP packets created by the multiplexing/fragmentation processing unit a12, if multiplexed, are called a "multiplexed packet."

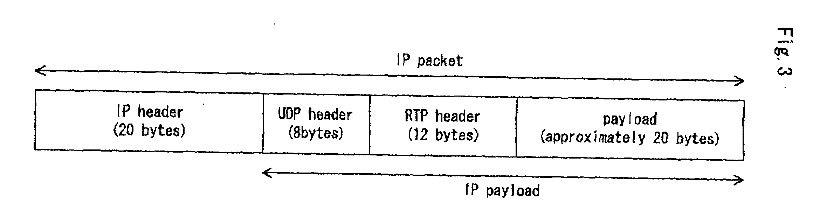

Referring now to Fig. 3, one example of a data structure of an IP packet which is to be multiplexed includes an IP header (20 bytes), an UDP header (8 bytes), an RTP header (12 bytes) and a payload (approximately 20 bytes). The IP packet of Fig. 3 is typical of the VoIP data structure.

In the following a portion which is formed by removing the IP header from the IP packet is called an "IP payload".

The following discussion assumes, unless specified otherwise, that the IP packet transmission apparatus A and the IP telephones a4 . . . are on the sending side while all other IP packet transmission apparatuses and IP telephones are on the receiving side. For example, the IP packet transmission apparatus B and the IP telephones b4 . . . are assumed to be on the receiving side.

Hence, the multiplexing/fragmentation means on the receiving side is occasionally referred to as a "destination apparatus" and the multiplexing/fragmentation means Al on the sending side is occasionally referred to as a "self-apparatus."

The multiplexing/fragmentation reference table all shown in Fig. 2 holds, regarding an IP telephone (terminal) located on the receiving side, a record which consists of an identifier (ID) of this IP telephone, an IP address of this IP telephone, and an IP address of the multiplexing/fragmentation means which has this IP telephone under its command (IP address of the destination-apparatus).

For instance, with respect to the IP telephones b4 . . ., the multiplexing/fragmentation reference table holds records which consist of identifiers of the IP telephones b4 . . ., the IP addresses of the IP telephones b4 .., and the IP address of the multiplexing/fragmentation means b1 which has the IP telephones b4 . . . under its command.

The sender buffer a13 temporarily stores data for multiplexing. The timer a14 notifies the multiplexing/fragmentation processing unit a12 of completion of multiplexing.

To be prepared in case the multiplexing/fragmentation reference table a11 is located on the receiving side, the multiplexing/fragmentation reference table a11 also holds records which consist of identifiers (IDs) of the IP telephones a4 . . . which are under the multiplexing /fragmentation means a1, the IP addresses of the IP telephones a4 . . ., and the IP address of the multiplexing/fragmentation means a1 (IP address of the self-apparatus).

The structure and function of the multiplexing/fragmentation means b1 are similar to those of the multiplexing/fragmentation means a1.

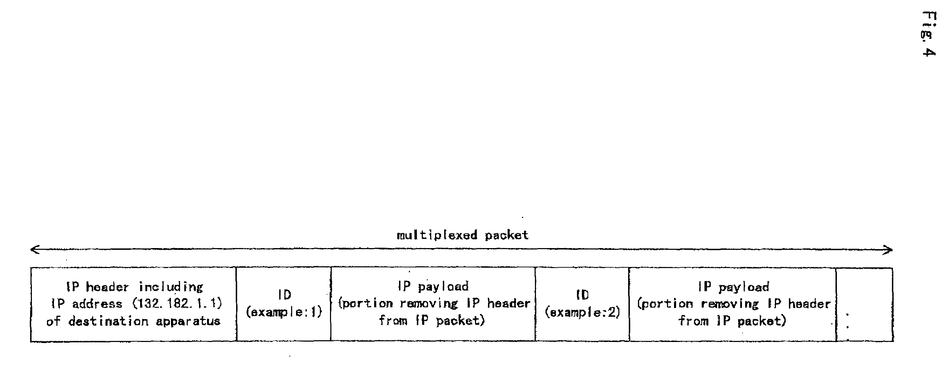

Referring now to Fig. 4, together with Figs. 1-3, the data structure of a multiplexed packet (records in multiplexed packets which are prepared in the sender buffer), multiplexing according to the preferred embodiment is described briefly. It is reiterated that the multiplexing/fragmentation means a1 and the like are on the sending side while the multiplexing/fragmentation means b1 and the like are on the receiving side.

First, when receiving an IP packet from a source IP telephone a4, using the multiplexing/fragmentation reference table all, the multiplexing/fragmentation processing unit a12 acquires an identifier (ID) of this source IP telephone (terminal) and the identifier of the destination IP telephone b4 and an IP address of the multiplexing/fragmentation means b1 which has this IP telephones b4 under its command (IP address of the destination-apparatus) based on an IP address of the IP telephones b4.

Next, as shown in Fig. 4, the multiplexing/fragmentation processing unit a12 places the IP address of the multiplexing/fragmentation means b (IP address of destination-apparatus) having the destination IP telephones b4 under its command at the beginning, adds the identifiers (IDs) of the destination IP telephones b4 after this, and further adds to this an IP payload (a portion created by removing the IP header from an IP packet).

Following this, the multiplexing/fragmentation processing unit a12 further adds the identifiers of the destination IP telephones b4 . . . which are under command of the multiplexing/fragmentation means b1 and IP payloads.

These elements may be added if the IP telephones b4 . . ., which are under command of the multiplexing/fragmentation means b1, are destinations, even though the IP addresses of these IP telephones b4 . . . are different from each other. In short, while the plurality of IP telephones b4 . . . exist, as long as these IP telephones b4 . . . are under the command of the multiplexing/fragmentation means b1, not only can packets addressed to the same IP telephones b4 . . . be transmitted, but packets addressed to different IP telephones b4 . . . can be multiplexed as well.

The multiplexing/fragmentation processing unit a12 thereafter terminates preparation of one multiplexed packet either when interrupted by the timer a14 (i.e., when a time period set in the timer a14 has elapsed) or when a record length of the multiplexed packet exceeds a predetermined value.

The time period set in the timer a14 is calculated from a delay time which is in a tolerable range for sending and receiving a general IP packet which is not to be multiplexed. The predetermined value is determined based on a maximum acceptable length of an IP packet.

The identifiers of the IP telephones b4 . . . have shorter record lengths than an IP header (Fig. 3). This similarly applies to the identifiers of the IP telephones a4. . . .

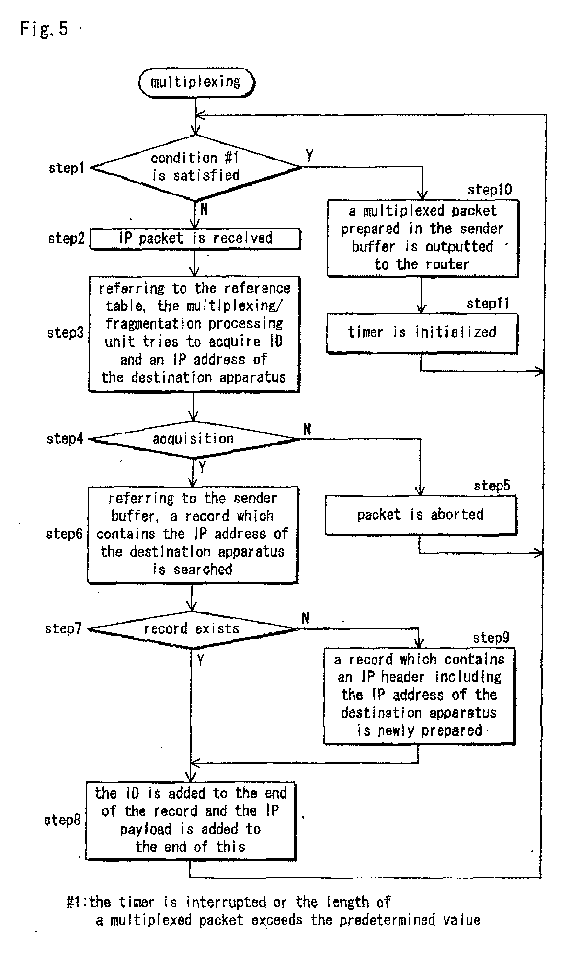

Next, the details of multiplexing above are described with reference to the flow chart in Fig. 5. It is reiterated that the multiplexing/fragmentation means a1 and the like are on the sending side while the multiplexing/fragmentation means b1 and the like are on the receiving side (destination side).

As noted at the bottom of Fig. 5, condition #1 requires the existence of either of two conditions 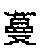 1) timer interrupt, or 2) packet length exceeds predetermined length. Step 1 considers whether or not condition #1 is satisfied. When condition #1 is not satisfied, the sequence proceeds to Step 2. That is, the sequence proceeds to Step 2 when the timer a14 has not been interrupted and the length of a multiplexed packet does not exceed the predetermined value at Step 1.

At Step 2, the multiplexing/fragmentation processing unit a12 receives an IP packet sent from the IP telephones a4 under command on the private network a3. The multiplexing/fragmentation processing unit a12 then acquires IP addresses of the IP telephones b4 . . . to which transmission is directed (destination) indicated in the received IP packet.

At Step 3, referring to the multiplexing/fragmentation reference table a11, the multiplexing/fragmentation processing unit a12 tries to acquire identifiers of the destination IP telephones b4 ... and an IP address of the multiplexing/fragmentation means b1 which has these IP telephones b4 . . . under its command (IP address of the destination apparatus).

If the acquisition fails, the multiplexing/fragmentation processing unit a12 aborts this IP packet and returns to Step 1, since the IP addresses of the destination IP telephones b4 . . . are not registered in the multiplexing/fragmentation reference table a11 (Step 4 and Step 5).

Alternatively, if acquisition fails, the multiplexing/fragmentation processing unit a12 may send this IP packet to the IP network 1 through the router a2, instead of aborting the IP packet.

If the acquisition is successful, the sequence proceeds to Step 6 (Step 4).

At Step 6, the multiplexing/fragmentation processing unit a12 searches and determines whether the sender buffer a13 already holds a record which contains the IP address of the multiplexing/fragmentation means b1 which was acquired in Step 3. When it is found at Step 7 that such a record exists, the sequence proceeds to Step 8.

At Step 8, the multiplexing/fragmentation processing unit a12 deletes the IP header from the IP packet which was received at Step 2 to thereby create an IP payload (Fig. 3).

The multiplexing/fragmentation processing unit a12 then pairs the identifiers of the IP telephones b4 . . . and the IP payload and adds the pairs after the record (containing the IP address of the multiplexing/fragmentation means b1) which was searched and obtained at Step 6.

When the identifier of the destination IP telephones b4 . . . is, for example, "132.182.1.101" as expressed in the multiplexing/fragmentation reference table a11 shown in Fig. 2, the identifier of the destination IP telephones b4 . . . is "1" and the IP address of the multiplexing/fragmentation means b 1 which has IP telephones b4 . . . under its command is "132.182.1.1" (Step 3).

In this case, the identifier of the destination IP telephones b4 . . . "1" is added to the end of the record shown in Fig. 4, and the IP payload is added to the end of this (Step 8). The sequence then returns to Step 1.

On the other hand, when it is found at Step 7 that the sender buffer a13 does not hold a record which contains the IP address of the multiplexing/fragmentation means b1 which was acquired at Step 3, the sequence proceeds to Step 9.

At Step 9, the multiplexing/fragmentation processing unit a12 prepares a new record which contains at its beginning an IP header including the IP address of the multiplexing/fragmentation means b1 which was acquired at Step 3.

The sequence then moves to Step 8 at which the identifiers of the IP telephones b4 . . . and the IP payload are added after the IP header which contains the IP address of the multiplexing/fragmentation means b1. The sequence then returns to Step 1.

While there exist a plurality of IP telephones b4 . . ., if these IP telephones b4 . . . belong to the same multiplexing/fragmentation means b1, even though identifiers of destination IP telephones b4 . . . are different from each other, the identifiers of these IP telephones b4 . . . and IP payloads are added after an IP address of the multiplexing/fragmentation means b1.

The above procedure continues until condition #1 is satisfied at Step 1. When condition #1 is satisfied, the sequence proceeds to Step 10. That is, when the timer a14 has been interrupted or the length of the multiplexed packet exceeds the predetermined value at Step 1, multiplexing (preparation of one multiplexed packet) is terminated and the sequence proceeds to Step 10.

At Step 10, the multiplexing/fragmentation processing unit a12 outputs a multiplex packet prepared in the sender buffer a13 to the router a2.

The multiplexing/fragmentation processing unit a12 initializes the timer a14 at Step 11 and processing returns to Step 1.

This procedure is repeated, whereby multiplexing is executed. As described in relation to Step 1 earlier, there are two types of conditions to terminate multiplexing.

One is when the length of one record (multiplexed packet) is the lowest in the sender buffer a13 and beyond the predetermined value, and the other is when a signal for termination of multiplexing is received from the timer a14.

The predetermined value is determined based on a maximum acceptable length of an IP packet (65,536 bytes including a header) in such a manner that the length of a prepared multiplexed packet does not exceed the maximum acceptable length of an IP packet

With the predetermined value determined in this manner, it is possible to avoid without fail a situation wherein the length of a prepared multiplexed packet is longer than the maximum acceptable length of an IP packet.

Termination by the timer a14 indicates a designation of the maximum allowable period of time for one multiplexing (preparation of one multiplexed packet) and controls a delay time in sending and receiving. For instance, when a delay time is beyond a tolerable range, the time period set in the timer a14 is reduced to thereby shorten the delay time.

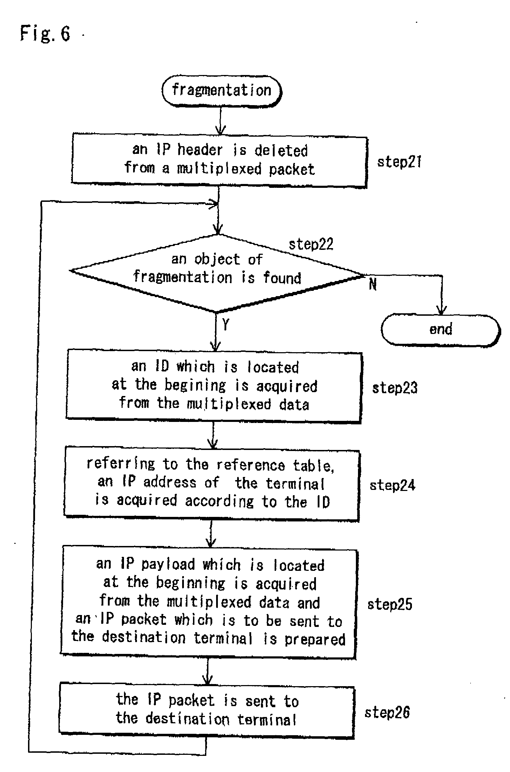

Next, the details of fragmentation of a multiplexed packet is described with reference to the flow chart in Fig. 6.

At Step 21, upon receipt of a multiplexed packet having the format shown in Fig. 4 from the IP network 1, the multiplexing/fragmentation means b1 deletes the IP header located at the beginning of the multiplexed packet.

When at Step 22 an object of fragmentation is found (when fragmentation of received multiplexed packets has not yet ended), the sequence proceeds to Step 23.

At Step 23, the multiplexing/fragmentation means b1 acquires an identifier of the IP telephones b4 . . . written at the beginning of the remaining field.

At Step 24, while referring to the multiplexing/fragmentation reference table which the IP packet transmission apparatus B contains, the multiplexing/fragmentation means b1 acquires an IP address of the IP telephones b4 . . . to which transmission is directed (destination).

At Step 25, the multiplexing/fragmentation means b1 acquires an IP payload which is located at the beginning, from the multiplexed packet from which the IP header was deleted in Step 21.

The multiplexing/fragmentation means b1 then prepares, from the IP address of the IP telephones b4 . . . to which transmission is directed (destination) acquired at Step 24 and the IP payload which is located at the beginning, an IP packet which is to be sent to the IP telephones b4 . . . to which transmission is directed (destination).

At Step 26, the multiplexing/fragmentation means b1 transfers the prepared IP packet to the to-be-transmitted (destination) IP telephones b4 . . . which is under command of the multiplexing/fragmentation means b1, via the private network b3.

Upon completion of the processing at Step 26, the sequence returns to Step 22. When it is found at Step 22 that there is no object of fragmentation (when there are no data to be processed), fragmentation of one multiplexed packet is completed. The above procedure is repeated for additional IP packets, whereby fragmentation of multiple packets is executed.

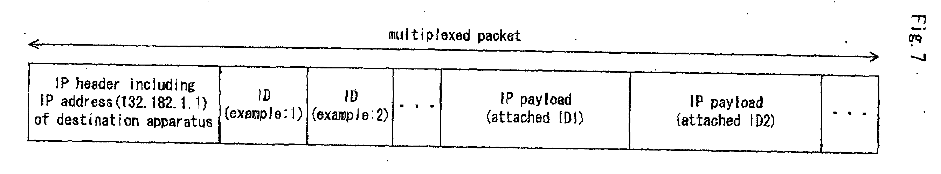

Fig. 7 is a drawing showing another example of a data structure of a multiplexed packet prepared by the multiplexing/fragmentation processing unit a12.

As shown in Fig. 7, a multiplexed packet may be prepared by placing an IP header containing an IP address of the multiplexing/fragmentation means b1 (IP address of the destination apparatus) at the beginning, adding after this a group of identifiers (IDs) of a plurality of IP telephones a4 . . . which are destinations, and further adding a group of a plurality of IP payloads after this.

The multiplexed packet preferably has the data structure shown in Fig. 4, for the following reason.

A data structure as shown in Fig. 7 requires, during multiplexing, rearrangement of identifiers such as grouping of a plurality of identifiers of sequentially received IP packets into one group and accordingly makes the processing complex. During fragmentation as well, the processing becomes similarly complex.

In contrast to this, when a data structure as shown in Fig. 4 is used, during multiplexing, it is possible to add an identifier and an IP payload one after another every time the multiplexing/fragmentation means a1 receives one IP packet.

This eliminates the necessity of rearranging a plurality of identifiers or a plurality of IP payloads, and hence, realizes high-speed multiplexing. In a similar manner, this realizes high-speed fragmentation as well.

As described above, according to the preferred embodiment, for execution of multiplexing, the multiplexing/fragmentation means a1 acquires an identifier of the IP telephones b4 . . . which is a destination and an IP address of the multiplexing/fragmentation means b1 which has this IP telephones b4 . . . under its command.

The multiplexing/fragmentation means a1 then places the IP address of the multiplexing/fragmentation means b1 having the destination IP telephones b4 . . . under its command at the beginning, and adds the identifier of the destination IP telephones b4 . . . and an IP payload after this, thereby preparing a multiplexed packet.

With this structure, when the multiplexing/fragmentation means a1 is to send out via the IP network 1 IP packets received from the IP telephones a4 . . . which are under the command of the multiplexing/fragmentation means a1, as long as the destination IP telephones b4 . . . remain under command of the multiplexing/fragmentation means b1 which is on the receiving side, not only can IP packets having the same IP address (IP telephones b4 . . . are directed to identical destinations.) but IP packets having different IP addresses (IP telephones b4 . . . are directed to different destinations.) be multiplexed as well.

Further, the identifiers of the IP telephones b4 . . . have shorter record lengths than IP headers. Hence, when comparing transmission of the same number of IP packets between an approach of sending the IP packets without multiplexing the IP packets and an approach of sending the IP packets after multiplexing the IP packets, it is clear the total number of packets to be sent out is smaller if transmission after multiplexing is used. As a result, the total bandwidth needed for the IP network 1 is reduced as much as possible the processing load upon switching devices existing in the IP network 1 is correspondingly decreased.

In addition, the multiplexing/fragmentation means a1 terminates preparation of one multiplexed packet either when the predetermined time period has elapsed (i.e., when interrupted by the timer a14) or when a record length of the multiplexed packet exceeds the predetermined value.

Since preparation of one multiplexed packet is terminated when the predetermined time period has elapsed in this manner, it is possible to appropriately set a delay time for sending and receiving of multiplexed packets and to maintain a constant transmission speed.

Further, since preparation of one multiplexed packet is terminated when a record length of a multiplexed packet exceeds the predetermined value, by determining the predetermined value considering a maximum length of an IP packet, the situation is avoided wherein the length of a prepared multiplexed packet exceeds the maximum packet length.

Moreover, the multiplexing/fragmentation means a1 comprises the multiplexing/fragmentation reference table a11 on its own. As compared with accessing a dedicated server or the like and using a multiplexing/fragmentation reference table, this realizes high-speedmultiplexing and fragmentation.

When there are a plurality of IP packet transmission apparatuses on the receiving side and IP packets are to be sent to IP telephones which belong to different IP packet transmission apparatuses, the multiplexing/fragmentation means a1 which is on the sending side prepares each multiplexed packet for each of the different multiplexing/fragmentation means (i.e., for each different IP packet transmission apparatus). Although the IP telephones a4 . . . and b4 . . . are used as terminal apparatuses which are connected to the private networks a3 and b3 in the preferred embodiment above, other apparatuses may be used instead as long as these apparatuses are terminal apparatuses capable of sending and receiving IP packets.

Further, although the foregoing has described, for convenience of description, the IP packet transmission apparatus A as the sending side and the IP packet transmission apparatus B in particular as the receiving side, all IP packet transmission apparatuses can perform multiplexing when they serve as the sending side while perfoming fragmentation when they serve as the receiving side.

In addition, when the multiplexing/fragmentation reference table of any IP packet transmission apparatus is updated, the multiplexing/fragmentation reference tables of the respective IP packet transmission apparatuses are updated through the IP network 1.

Further, the multiplexing/fragmentation reference tables may be used by accessing a server which holds the multiplexing/fragmentation reference tables and is connected to the IP network 1.

Still further, although the foregoing description uses an example in which there are two hierarchical layers (the multiplexing/fragmentation means and the IP telephones), a system with more than two hierarchical layers may be used without departing from the spirit and scope of the invention.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. An IP packet transmission apparatus comprising:
multiplexing means;
said multiplexing means including means for sending to an IP network a multiplexed packet;
said multiplexed packet including a plurality of IP packets from terminals which are under command of said multiplexing means;
fragmentation means for fragmenting said multiplexed packet received through said IP network into a plurality of IP packets and for transferring said plurality of IP packets to terminals which are under command of said fragmentation means;
said multiplexing means including means for acquiring, with respect to a destination terminal, an identifier of said destination terminal and an IP address of a fragmentation means which has said destination terminal under its command;
a beginning of said multiplexed packet including said IP address of said fragmentation means which has said destination terminal under its command, and said multiplexed packet includes said identifier of said destination terminal and a portion removing an IP header from an IP packet; and
said identifier is smaller than that of said IP header.

2. An IP packet transmission apparatus set forth in claim 1, further comprising:
said multiplexing means including means for adding said identifier of said destination terminal after said IP address of said fragmentation means which has said destination terminal under its command, and then for adding said portion removing said IP header from said IP packet, to thereby prepare said multiplexed packet.

3. An IP packet transmission apparatus set forth in claim 1, wherein said multiplexing means terminates preparation of a multiplexed packet after a predetermined period of time has elapsed.

4. An IP packet transmission apparatus set forth in claim 1, wherein said multiplexing means terminates preparation of a multiplexed packet when a record length of said multiplexed packet being prepared exceeds a predetermined length.

5. An IP packet transmission apparatus set forth in claim 3, wherein said multiplexing means terminates preparation of said multiplexed packet when a record length of a multiplexed packet being prepared exceeds a predetermined length.

6. An IP packet transmission apparatus set forth in claim 1, further comprising:
a multiplexing reference table in said multiplexing means;
said multiplexing reference table associates, with respect to said destination terminal, an IP address of said destination terminal, an identifier of said destination terminal and said IP address of said fragmentation means which has said destination terminal under its command;
said multiplexing means, using said multiplexing reference table, includes means for acquiring said identifier of said destination terminal and said IP address of said fragmentation means which has said destination terminal under its command, based on said IP address of said destination terminal;
a fragmentation reference table in said fragmentation means;
said fragmentation means, using said fragmentation reference table includes means for associating, with respect to a terminal which is under command of said fragmentation means, an IP address of said terminal, an identifier of said terminal and said IP address of said fragmentation means; and
using said fragmentation reference table and based on an identifier contained in said multiplexed packet which is received, said fragmentation means includes means for acquiring an IP address of a corresponding terminal, and for preparing and transferring an IP packet.

7. An IP packet transmission apparatus set forth in claim 3, wherein:
said multiplexing means includes a multiplexing reference table which associates, with respect to said destination terminal, an IP address of said destination terminal, an identifier of said destination terminal and said IP address of said fragmentation means which has said destination terminal under its command;
responsive to said multiplexing reference table, said multiplexing means includes means for acquiring said identifier of said destination terminal and said IP address of said fragmentation means which has said destination terminal under its command, based on said IP address of said destination terminal;
said fragmentation means includes a fragmentation reference table which associates, with respect to a terminal which is under command of said fragmentation means, an IP address of said terminal, an identifier of said terminal and said IP address of said fragmentation means, and
responsive to said fragmentation reference table and based on an identifier contained in said multiplexed packet which is received, said fragmentation means includes means for acquiring an IP address of a corresponding terminal, and for preparing and transferring an IP packet.

8. An IP packet transmission apparatus set forth in claim 4, wherein:
said multiplexing means includes a multiplexing reference table which associates, with respect to said destination terminal, an IP address of said destination terminal, an identifier of said destination terminal and said IP address of said fragmentation means which has said destination terminal under its command;
responsive to said multiplexing reference table, said multiplexing means includes means for acquiring said identifier of said destination terminal and said IP address of said fragmentation means which has said destination terminal under its command, based on said IP address of said destination terminal;
said fragmentation means includes a fragmentation reference table which associates, with respect to a terminal which is under command of said fragmentation means, an IP address of said terminal, an identifier of said terminal and said IP address of said fragmentation means; and
responsive to said fragmentation reference table and based on an identifier contained in said multiplexed packet which is received, said fragmentation means includes means for acquiring an IP address of a corresponding terminal, and for preparing and transferring an IP packet.

9. An IP packet transmission apparatus set forth in claim 5, wherein:
said multiplexing means includes a multiplexing reference table which associates, with respect to said destination terminal, an IP address of said destination terminal, an identifier of said destination terminal and said IP address of said fragmentation means which has said destination terminal under its command;
responsive to said multiplexing reference table, said multiplexing means includes means for acquiring said identifier of said destination terminal and said IP address of said fragmentation means which has said destination terminal under its command, based on said IP address of said destination terminal;
said fragmentation means includes a fragmentation reference table which associates, with respect to a terminal which is under command of said fragmentation means, an IP address of said terminal, an identifier of said terminal and said IP address of said fragmentation means; and
resonsive to said fragmentation reference table and based on an identifier contained in said multiplexed packet which is received, said fragmentation means includes means for acquiring an IP address of a corresponding terminal, and for preparing and transferring an IP packet.

10. An IP packet transmission method which deploys multiplexing means, which sends out to an IP network a multiplexed packet, comprising:
multiplexing a plurality of IP packets which are sent from terminals which are under command of said multiplexing means;
fragmenting in a fragmenting means said multiplexed packet received through said IP network into a plurality of IP packets;
transferring said packets to terminals which are under command of said fragmentation means, to thereby transmit an IP packet;
said multiplexing means acquiring, at a beginning thereof, with respect to a destination terminal, an identifier of said destination terminal and an IP address of fragmentation means which has said destination terminal under command of said fragmentation means;
said multiplexed packet is said IP address of said fragmentation means which has said destination terminal under its command, and said multiplexed packet includes said identifier of said destination terminal and a portion removing an IP header from an IP packet; and
said identifier has a smaller quantity of information than that of said IP header.

11. An IP packet transmission method set forth in claim 10, wherein:
said multiplexing means adding said identifier of said destination terminal after said IP address of said fragmentation means which has said destination terminal under its command, and further adding said portion removing said IP header from said IP packet after this, to thereby prepare said multiplexed packet.

12. An IP packet transmission method set forth in claim 10, wherein said multiplexing means terminates preparation of one multiplexed packet when a predetermined period of time has elapsed.

13. An IP packet transmission method set forth in claim 10, wherein said multiplexing means terminating preparation of one multiplexed packet when a record length of a multiplexed packet which is being prepared exceeds a predetermined value.

14. An IP packet transmissaon method set forth in claim 12, wherein said multiplexing means terminating preparation of one multiplexed packet when a record length of a multiplexed packet which is being prepared exceeds a predetermined value.

15. An IP packet transmission method set forth in claim 10, wherein said multiplexing means employing a multiplexing reference table which associates, with respect to said destination terminal, an IP address of said destination terminal, an identifier of said destination terminal and said IP address of said fragmentation means which has said destination terminal under its command;
using said multiplexing reference table, said multiplexing means acquiring said identifier of said destination terminal and said IP address of said fragmentation means which has said destination terminal under its command, based on said IP address of said destination terminal;
said fragmentation means has a fragmentation reference table which associates, with respect to a terminal which is under command of said fragmentation means, an IP address of said terminal, an identifier of said terminal and said IP address of said fragmentation means; and
using said fragmentation reference table and based on an identifier contained in said multiplexed packet which is received, said fragmentation means acquiring an IP address of a corresponding terminal, and preparing and transferring an IP packet.

16. An IP packet transmission method set forth in claim 12, wherein said multiplexing means has a multiplexing reference table which associates, with respect to said destination terminal, an IP address of said destination terminal, an identifier of said destination terminal and said IP address of said fragmentation means which has said destination terminal under its command,
using said multiplexing reference table, said multiplexing means acquiring said identifier of said destination terminal and said IP address of said fragmentation means which has said destination terminal under its command, based on said IP address of said destination terminal;
said fragmentation means includes a fragmentation reference table which associates, with respect to a terminal which is under command of said fragmentation means, an IP address of said terminal, an identifier of said terminal and said IP address of said fragmentation means; and
using said fragmentation reference table and based on an identifier contained in said multiplexed packet which is received, said fragmentation means acquiring an IP address of a corresponding terminal, and preparing and transferring an IP packet.

17. An IP packet transmission method set forth in claim 13, wherein said multiplexing means includes a multiplexing reference table which associates, with respect to said destination terminal, an IP address of said destination terminal, an identifier of said destination terminal and said IP address of said fragmentation means which has said destination terminal under its command;
using said multiplexing reference table, said multiplexing means acquiring said identifier of said destination terminal and said IP address of said fragmentation means which has said destination terminal under its command, based on said IP address of said destination terminal,
said fragmentation means includes a fragmentation reference table which associates, with respect to a terminal which is under command of said fragmentation means, an IP address of said terminal, an identifier of said terminal and said IP address of said fragmentation means; and
using said fragmentation reference table and based on an identifier contained in said multiplexed packet which is received, said fragmentation means acquiring an IP address of a corresponding terminal, and preparing and transferring an IP packet.

18. An IP packet transmission method set forth in claim 14, wherein said multiplexing means includes a multiplexing reference table which associates, with respect to said destination terminal, an IP address of said destination terminal, an identifier of said destination terminal and said IP address of said fragmentation means which has said destination terminal under its command;
using said multiplexing reference table, said multiplexing means acquiring said identifier of said destination terminal and said IP address of said fragmentation means which has said destination terminal under its command, based on said IP address of said destination terminal,
said fragmentation means has a fragmentation reference table which associates, with respect to a terminal which is under command of said fragmentation means, an IP address of said terminal, an identifier of said terminal and said IP address of said fragmentation means; and
using said fragmentation reference table and based on an identifier contained in said multiplexed packet which is received, said fragmentation means acquiring an IP address of a corresponding terminal, and preparing and transferring an IP packet.

19. A recording medium which holds an IP packet transmission program such that a computer can read said IP packet transmission program, comprising:
said IP packet transmission program deploying multiplexing means, which sends out to an IP network a multiplexed packet;
said program including means for multiplexing a plurality of IP packets which are sent from terminals which are under command of said multiplexing means, and fragmentation means, which fragments said multiplexed packet received through said IP network into a plurality of IP packets and transfers the packets to terminals which are under command of said fragmentation means, to thereby transmit an IP packet;
said multiplexing means acquires, with respect to a destination terminal, an identifier of said destination terminal and an IP address of fragmentation means which has said destination terminal under command of said fragmentation means;
located at the beginning of said multiplexed packet is said IP address of said fragmentation means which has said destination terminal under its command, and said multiplexed packet includes said identifier of said destination terminal and a portion removing an IP header from an IP packet; and
the record length of said identifier is set to be shorter than the record length of said IP header.
